# EUROPEAN PATENT APPLICATION

(11) **EP 4 592 849 A2**
(43) Date of publication of application: **30.07.2025**
(21) Application number: 25153480.6
(22) Date of filing: 23.01.2025
(51) Int. Cl.: G06F 11/22

(54) **PROCESSOR TESTING METHOD, APPARATUS, ELECTRONIC DEVICE, AND STORAGE MEDIUM**

(30) Priority: 23.01.2024 CN 202410096232
(71) Applicant: Beijing Horizon Information Technology Co., Ltd., Beijing 100094 (CN)
(72) Inventor: Ding, Jinnan, Beijing, 100094 (CN)
(74) Representative: Patentanwälte Magenbauer & Kollegen Partnerschaft mbB

(57) **Abstract**

Embodiments of this disclosure disclose a processor testing method and apparatus, an electronic device, and a storage medium. The method includes: obtaining an initialization instruction; initializing a preset parameter in a storage space to a test input value based on the initialization instruction; controlling an operation unit to perform operation on the test input value, to obtain an operation result; and determining a test result based on the operation result. In the embodiments of this disclosure, the preset parameter in the storage space is initialized as the test input value based on the initialization instruction, so that a same type of operation units in all processor cores of a processor can concurrently perform same operation on the test input value to obtain the operation result. Frequent loading and caching of the standard result can be avoided during a testing process, thereby efficiently improving testing efficiency.

## Description

### FIELD OF THE INVENTION

This disclosure relates to testing technologies, and in particular, to a processor testing method, apparatus, an electronic device, and a storage medium.

### BACKGROUND OF THE INVENTION

In scenarios such as autonomous driving and assisted driving, there is usually a large demand for concurrent calculation in in-vehicle applications, which requires use of a GPU (graphics processing unit), a DSP (digital signal processor), a VPU (vector processing unit), and other processors that can process vectors (which may also be referred to as stream processors) for calculation acceleration. To be applied to the calculation in the in-vehicle applications, these processors need to meet certain functional safety standards. Therefore, these processors need to be tested. In related technologies, a test case is usually developed, and a standard result is prepared in advance to be compared with a hardware calculation result of the processor. As a result, frequent loading and caching of the standard result are required during a testing process, which reduces testing efficiency.

### SUMMARY OF THE INVENTION

To resolve the foregoing technical problem that frequent loading of a standard result reduces testing efficiency, embodiments of this disclosure provide a processor testing method and apparatus, an electronic device, and a storage medium, to improve the testing efficiency.

According to a first aspect of this disclosure, a processor testing method is provided, including: obtaining an initialization instruction; initializing a preset parameter in a storage space to a test input value based on the initialization instruction; controlling an operation unit to perform operation on the test input value, to obtain an operation result; and determining a test result based on the operation result.

According to a second aspect of this disclosure, a processor testing apparatus is provided, including: an obtaining module, configured to obtain an initialization instruction; an initialization module, configured to initialize a preset parameter in a storage space to a test input value based on the initialization instruction; a control module, configured to control an operation unit to perform operation on the test input value, to obtain an operation result; and a processing module, configured to determine a test result based on the operation result.

According to a third aspect of this disclosure, a computer readable storage medium is provided. The storage medium stores a computer program, and the computer program is used for implementing the processor testing method according to any one of the foregoing embodiments of this disclosure.

According to a fourth aspect of this disclosure, an electronic device is provided. The electronic device includes: a processor; and a memory configured to store processor-executable instructions. The processor is configured to read the executable instructions from the memory, and execute the instructions to implement the processor testing method according to any one of the foregoing embodiments of this disclosure.

According to a fifth aspect of this disclosure, a computer program product is provided. When instructions in the computer program product are executed by a processor, the processor testing method according to any one of the foregoing embodiments of this disclosure is implemented.

According to the processor testing method and apparatus, the electronic device, and the storage medium that are provided in the embodiments of this disclosure, the preset parameter in the storage space is initialized as the test input value based on the initialization instruction, so that a same type of operation units in all processor cores of a processor may concurrently perform same operation on the test input value to obtain the operation result. The test result may be determined based on operation results of all operation units, so as to implement self-tests of the processor without preparing a standard result in advance or comparing the operation result with the standard result. Therefore, frequent loading and caching of the standard result may be avoided during a testing process, thereby efficiently improving testing efficiency.

### BRIEF DESCRIPTION OF THE DRAWINGS

FIG. 1 is an exemplary application scenario of a processor testing method according to this disclosure;
FIG. 2 is a schematic flowchart of a processor testing method according to an exemplary embodiment of this disclosure;
FIG. 3 is a schematic flowchart of a processor testing method according to another exemplary embodiment of this disclosure;
FIG. 4 is a schematic flowchart of a processor testing method according to still another exemplary embodiment of this disclosure;
FIG. 5 is a schematic flowchart of a processor testing method according to yet another exemplary embodiment of this disclosure;
FIG. 6 is a schematic diagram of a structure of a processor core according to an exemplary embodiment of this disclosure;
FIG. 7 is a schematic flowchart of a processor testing method according to still yet another exemplary embodiment of this disclosure;
FIG. 8 is a schematic flowchart of a processor testing method according to a further exemplary embodiment of this disclosure;
FIG. 9 is a schematic diagram of a structure of a processor according to an exemplary embodiment of this disclosure;
FIG. 10 is a schematic flowchart of a processor testing method according to a still further exemplary embodiment of this disclosure;
FIG. 11 is a schematic diagram of a structure of a processor testing apparatus according to an exemplary embodiment of this disclosure;
FIG. 12 is a schematic diagram of a structure of a processor testing apparatus according to another exemplary embodiment of this disclosure; and
FIG. 13 is a diagram of a structure of an electronic device according to an embodiment of this disclosure.

### DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

### Overview of this disclosure

In a process of implementing this disclosure, the inventor finds that in scenarios such as autonomous driving and assisted driving, there is usually a large demand for concurrent calculation in in-vehicle applications, which requires use of a GPU (graphics processing unit), a DSP (digital signal processor), a VPU (vector processing unit), and other processors that can process vectors (which may also be referred to as stream processors) for calculation acceleration. To be applied to the calculation in the in-vehicle applications, these processors need to meet certain functional safety standards. Therefore, these processors need to be tested. In related technologies, a test case is usually developed, and a standard result is prepared in advance to be compared with a hardware calculation result of the processor. As a result, frequent loading and caching of the standard result are required during a testing process, which reduces testing efficiency.

### Exemplary overview

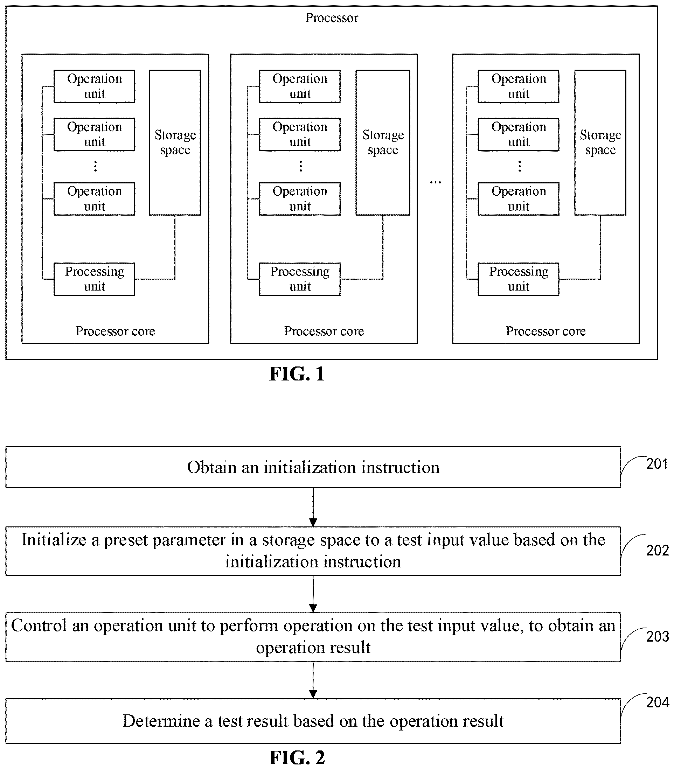

FIG. 1 is an exemplary application scenario of a processor testing method according to this disclosure. As shown in FIG. 1, a processor includes one or more processor cores (which may be referred to as cores for short). Each core of the processor may include a storage space and at least one operation unit, and may also include a processing unit. The processing unit may be configured to implement the method in this disclosure, so as to implement self-tests of the processor core. The storage space in the processor core may be a private storage space of the processor core. The processor core may be a stream processor core, which may be configured to calculate at least one of a vector and a scalar. For example, the operation unit may include at least one of a vector operation unit and a scalar operation unit. Cores of the processor may perform calculation concurrently in applications, so as to meet requirements for concurrent calculation in application scenarios (such as autonomous driving, assisted driving, or other scenarios). A specific quantity of operation units may be set according to actual requirements. For each core of the processor, by using the processor testing method in this disclosure, an initialization instruction may be obtained; a preset parameter in the storage space may be initialized to a test input value based on the initialization instruction; an operation unit may be controlled to perform operation on the test input value, to obtain an operation result; and a test result may be determined based on the operation result. According to the processor testing method in this disclosure, the preset parameter in the storage space is initialized as the test input value based on the initialization instruction, so that a same type of operation units in all cores of the processor may concurrently perform same operation on the test input value to obtain the operation result. The test result may be determined based on operation results of all operation units. For example, operation results of a plurality of the same type of operation units are compared pairwise, and the test result is determined based on comparison results. Channels in the vector operation unit may also be enabled to perform same operation, and the test result of the operation unit may be determined by comparing operation results of the channels. According to this disclosure, self-tests of the processor are implemented without preparing a standard result in advance or comparing the operation result with the standard result. Therefore, frequent loading and caching of the standard result can be avoided during a testing process, thereby efficiently improving testing efficiency.

In processor applications, the processor testing method in this disclosure may implement self-tests on the processor according to a certain testing trigger rule. For example, self-tests are performed at certain time intervals or self-tests are triggered when it is detected that the processor is idle, so that the processor may be tested according to a testing process of the method in this disclosure, so as to obtain the test result. Moreover, exception prompt information may be output in a timely manner when the test result is abnormal (or failed), thereby improving application reliability of the processor.

The processor testing method in this disclosure is not limited to be applied to scenarios such as autonomous driving and assisted driving, but may also be applied to any other scenarios where concurrent calculation can be performed by using the processor, such as application scenarios of terminal devices such as a mobile phone and a tablet. This is not specifically limited.

### Exemplary method

FIG. 2 is a schematic flowchart of a processor testing method according to an exemplary embodiment of this disclosure. This embodiment may be applicable to an electronic device, such as an in-vehicle computing platform. As shown in FIG. 2, the method includes the following steps.

Step 201. Obtain an initialization instruction.

The initialization instructions may be pre-configured in each processor core within a processor. The initialization instruction may include a test input value. After entering a testing process, each core of the processor may obtain the initialization instruction from an internal storage space for self-tests. The processor core may be a stream processor core.

In this embodiment of this disclosure, any processor core in the processor may be used as an execution body of the method of in this embodiment of this disclosure. This processor core may be used as a current processor core (which may be referred to as a current core for short), and processor cores except the current processor core in the processor may be referred to as other processor cores (which may be referred to as other cores for short). A process flow of each core in the processor is consistent with that of the current processor core.

In some optional embodiments, the processor core may obtain the initialization instruction after detecting a trigger signal for entering the testing process. The trigger signal may be triggered in any feasible way. For example, the trigger signal is generated according to a time rule, based on an idle status of the processor core, or based on a user operation.

In some optional embodiments, a processing unit (as shown in FIG. 1) in the processor core may obtain the initialization instruction and perform subsequent testing processes.

Step 202. Initialize a preset parameter in a storage space to a test input value based on the initialization instruction.

The storage space may be a private storage space within the processor core. The preset parameter refers to a parameter input as an operation unit in the current processor core. In practical applications, the preset parameter is assigned as an input value that the operation unit actually needs to calculate. After the testing process is entered, the preset parameter is initialized as the test input value based on the initialization instruction, so as to use the test input value as the input value of the operation unit to test the operation unit. The test input value is a preset value or a value generated according to a preset rule. For example, the test input value is randomly generated every time, thereby improving reliability of the test.

In some optional embodiments, the specific test input value of the operation unit may be set according to actual requirements, and a principle is to be able to perform self-tests within the processor without frequently loading and caching pre-prepared input values for test cases from the external.

In some optional embodiments, the test input value may include input values respectively corresponding to different types of operation units in the processor core. For example, the test input value may include at least one of a vector input value of a vector operation unit and a scalar input value of a scalar operation unit.

In some optional embodiments, test input values of a same type of operation units in each processor core may be the same, so that a test result may be obtained by comparing operation results of the operation units. For example, multiple operation units of a same type in a same core of the processor have a same test input value, and operation results of the same type of operation units may be compared within the core of the processor to obtain the test result of the operation unit.

In some optional embodiments, test input values of a same type of operation units in different cores of the processor may be the same, so that operation results of the same type of operation units in different cores of the processor may be compared to obtain the test result of the operation unit.

In some optional embodiments, for the vector operation unit, test input values of all channels in the vector operation unit may also be set to a same value, so that the operation unit may be tested by comparing operation results of all the channels.

In some alternative embodiments, the storage space may be a register space, which stores the preset parameter through a register. The test input value is initialized by being written into the register corresponding to the preset parameter.

Step 203. Control an operation unit to perform operation on the test input value, to obtain an operation result.

The operation unit may be controlled through an operation instruction. For example, the operation instruction corresponding to the operation unit may be obtained, and the operation unit may be controlled to perform operation on the test input value based on the operation instruction, to obtain the operation result.

In some optional embodiments, the operation instruction may be obtained from an external memory (such as a double data rate synchronous dynamic random access memory (DDR)) of the processor core, or may be pre-configured in the storage space within the processor core. This is not specifically limited.

In some optional embodiments, according to the type of the operation units in the processor core, the operation result may include at least one of a vector operation result of the vector operation unit and a scalar operation result of the scalar operation unit.

Step 204. Determine a test result based on the operation result.

The test result may be determined by comparing the operation results of the current processor core, or by comparing the operation results of the current processor core with those of other cores except the current processor core in the processor. For example, for the current processor core, if the current processor core includes multiple operation units of a same type, such as multiple vector operation units or multiple scalar operation units, the operation results of the same type of operation units may be compared to determine a test result of that type of operation units. For any type of operation units, if the current processor core only includes one operation unit of that type, the operation result of that operation unit may be compared with the operation results of that type of operation units in other cores of the processor, so as to obtain the test result of that type of operation units. For the vector operation unit in the current processor core, the vector operation result may include the operation results respectively corresponding to the channels in the vector operation unit, respectively, and the test result of the vector operation unit may also be determined by comparing the operation results of all the channels.

According to the processor testing method provided in the embodiments, the preset parameter in the storage space is initialized as the test input value based on the initialization instruction, so that a same type of operation units in all cores of the processor may concurrently perform same operation on the test input value to obtain the operation result. The test result may be determined based on operation results of all operation units, so as to implement self-tests of the processor without preparing a standard result in advance or comparing the operation result with the standard result. Therefore, frequent loading and caching of the standard result may be avoided during a testing process, thereby efficiently improving testing efficiency.

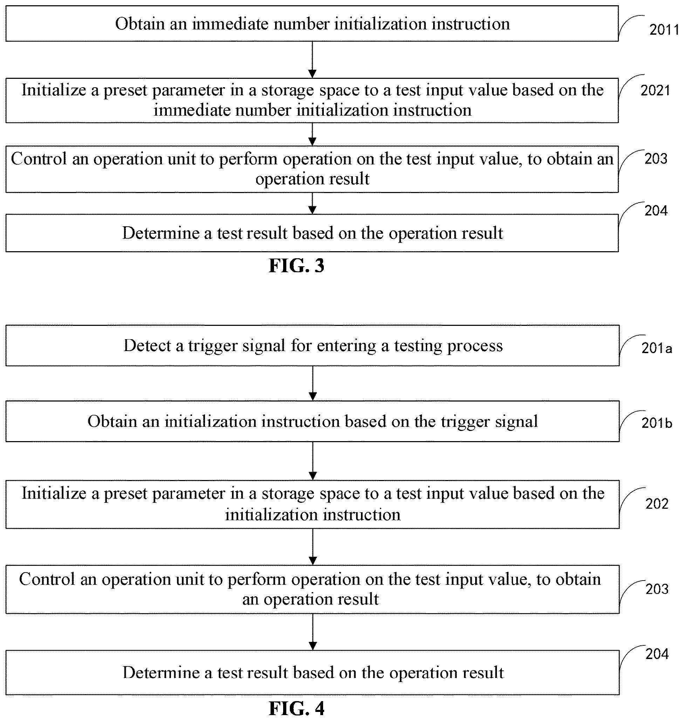

FIG. 3 is a schematic flowchart of a processor testing method according to another exemplary embodiment of this disclosure.

In some optional implementations, as shown in FIG. 3, step 201 of obtaining the initialization instruction includes the following steps.

Step 2011. Obtain an immediate number initialization instruction.

The immediate number initialization instruction includes the test input value to be written into the storage space.

In some optional embodiments, the immediate number initialization instruction may include the test input value to be written into the storage space. Once the immediate number initialization instruction is obtained, initialization may be performed according to the immediate number initialization instruction, which may avoid loading data from an external memory, thereby helping improve efficiency of input initialization.

Step 202 of initializing the preset parameter in the storage space as the test input value based on the initialization instruction includes:
Step 2021. Initialize the preset parameter in the storage space as the test input value based on the immediate number initialization instruction.

The immediate number initialization instruction may be executed to write the test input value included in the instruction into the register corresponding to the preset parameter in the storage space, so as to initialize the preset parameter in the storage space as the test input value.

According to the embodiments, the preset parameter in the storage space is initialized as the test input value through the immediate number initialization instruction, which may avoid loading the data from the external storage, thereby helping improve the efficiency of input initialization and improve testing efficiency.

FIG. 4 is a schematic flowchart of a processor testing method according to still another exemplary embodiment of this disclosure.

In some optional implementations, as shown in FIG. 4, step 201 of obtaining the initialization instruction includes the following steps.

Step 201a. Detect a trigger signal for entering a testing process.

The trigger signal may be determined in any feasible way. For example, the trigger signal is generated according to a time rule, based on an idle status of the processor core, or based on a user operation.

For example, if it is detected that trigger time is currently reached, it is determined that the trigger signal for entering the testing process is detected. If it is detected that the processor is in an idle status, it is determined that the trigger signal for entering the testing process is detected, so as to perform testing when the processor is idle, without affecting normal application of the processor. If an operation instruction for entering the testing process of a user is detected, it is determined that the trigger signal for entering the testing process is detected.

Step 201b. Obtain the initialization instruction based on the trigger signal.

The initialization instruction is obtained in response to detecting the trigger signal for entering the testing process.

According to the embodiments, detection of the trigger signal for entering the testing process helps enter the testing process based on the trigger signal, which helps implement automated self-tests of the processor.

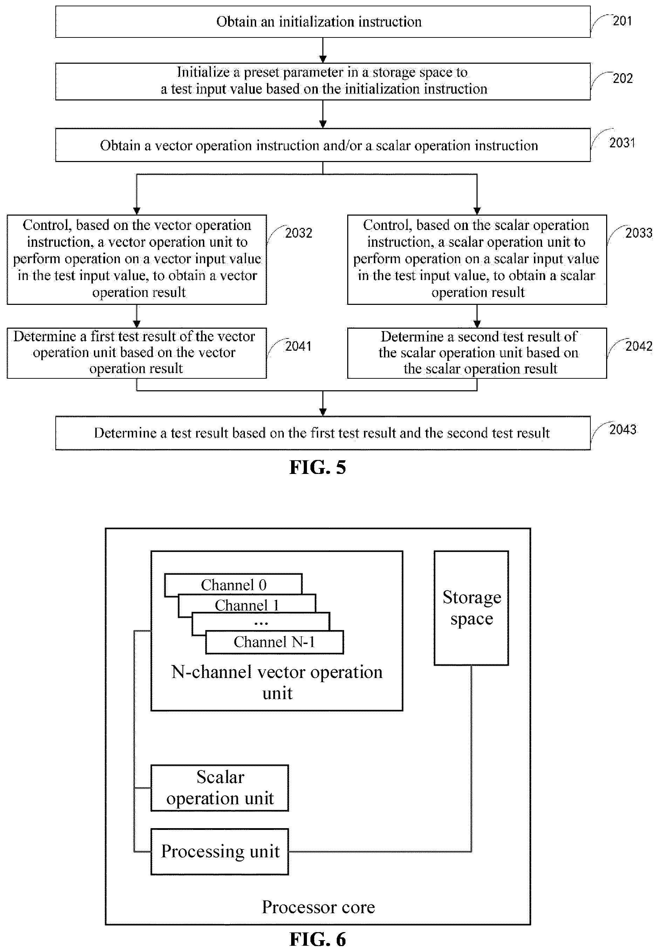

FIG. 5 is a schematic flowchart of a processor testing method according to yet another exemplary embodiment of this disclosure.

In some optional implementations, as shown in FIG. 5, step 203 of controlling the operation unit to perform operation on the test input value, to obtain the operation result includes the following steps.

Step 2031. Obtain a vector operation instruction and/or a scalar operation instruction.

The vector operation instruction is an instruction that controls the vector operation unit to perform vector operation, and the scalar operation instruction is an instruction that controls the scalar operation unit to perform scalar operation.

In some optional embodiments, the vector operation instruction and/or the scalar operation instruction may be pre-stored in an external memory of the processor core. In this case, the vector operation instruction and/or the scalar operation instruction may be obtained from the external memory.

In some optional embodiments, the vector operation instruction and/or the scalar operation instruction may also be pre-configured in the storage space within the processor core. In this case, the vector operation instruction and/or the scalar operation instruction may be obtained from the internal storage space.

Step 2032. Control, based on the vector operation instruction, a vector operation unit to perform operation on a vector input value in the test input value, to obtain a vector operation result.

The vector operation instruction may include at least one of arithmetic operation instructions such as addition and multiplication, and logical operation instructions such as shift. This may be specifically set based on actual operational functions of the operation unit.

In some optional embodiments, the vector operation instruction may be executed to read the vector input value in the test input value from the storage space and provide the vector input value to the vector operation unit. The vector operation unit is controlled to work and perform operation on the vector input value, to obtain the vector operation result.

In some optional embodiments, after being obtained, the vector operation result may also be written into the storage space for storage. For example, the vector operation result is written into a register in the storage space that is used for storing the vector operation result.

Step 2033. Control, based on the scalar operation instruction, a scalar operation unit to perform operation on a scalar input value in the test input value, to obtain a scalar operation result.

The operation result includes the vector operation result and/or the scalar operation result.

In some optional embodiments, the scalar operation instruction may include at least one of arithmetic operation instructions such as addition and multiplication, and logical operation instructions such as shift. This may be specifically set based on actual operational functions of the operation unit.

In some optional embodiments, the scalar operation instruction may be executed to read the scalar input value in the test input value from the storage space and provide the scalar input value to the scalar operation unit. The scalar operation unit is controlled to work and perform operation on the scalar input value, to obtain the scalar operation result.

In some optional embodiments, after being obtained, the scalar operation result may also be written into the storage space for storage. For example, the scalar operation result is written into a register in the storage space that is used for storing the scalar operation result.

It should be noted that steps 2032 and 2033 are not in a sequential order.

In some optional embodiments, at least one of the vector operation unit and the scalar operation unit in the processor core may be tested according to actual requirements. In this case, step 203 of controlling the operation unit to perform operation on the test input value, to obtain the operation result may include: obtaining the vector operation instruction and/or the scalar operation instruction. Based on the obtained operation instruction, an operation unit corresponding to the operation instruction is controlled to perform operation to obtain the operation result corresponding to the operation instruction. In this case, the operation result includes the vector operation result and/or the scalar operation result.

According to the embodiments, the vector operation unit is controlled through the vector operation instruction to perform operation on the vector input value to obtain the vector operation result, and/or the scalar operation unit is controlled through the scalar operation instruction to perform operation on the scalar input value to obtain the scalar operation result. In this way, the operation of the operation unit on the test input value is implemented, which facilitates determining of the test result of the operation unit based on the operation result. This helps detect an exception of the processor in a timely manner, thereby ensuring working reliability of the processor, and improving safety of application scenarios of the processor, such as improving driving safety of a self-driving vehicle.

In some optional implementations, as shown in FIG. 5, step 204 of determining test result based on the operation result includes the following steps.

Step 2041. Determine a first test result of the vector operation unit based on the vector operation result.

In some optional embodiments, the first test result of the vector operation unit may be determined based on the operation results respectively corresponding to channels of the vector operation unit in the vector operation result. For example, if input values of the channels are the same and operation of the channels is correct, the operation results of the channels need to be the same. Based on this, the operation results of the channels may be compared, and the first test result of the vector operation unit may be determined based on a comparison result.

In some optional embodiments, if there are multiple vector operation units, the vector operation result includes vector operation results respectively corresponding to the vector operation units. First test results respectively corresponding to the vector operation units may also be determined based on the vector operation results respectively corresponding to the vector operation units. For example, test input values of the multiple vector operation units may be set to a same test input vector (that is, the vector input value), and the vector operation units may concurrently perform operation on the same test input vector to obtain the vector operation results respectively corresponding to all the vector operation units. If the operation of the vector operation units is correct, the various vector operation results need to be the same. Based on this, the vector operation results respectively corresponding to the vector operation units may be compared, for example, the vector operation results may be compared pairwise, so as to determine the first test result of each vector operation unit based on the comparison result. In this case, the input values of the channels in each vector operation unit may be same or different.

For example, the current processor core includes a vector operation unit A and a vector operation unit B. The vector input value includes a first input vector *f*_{*in,*1} = [*a b c*]*^{T}* and a second input vector *f*_{*in*,2} = [*d e f*]*^{T}* that are to be added, where *T* represents transposition. There are 3 channels in the vector operation units A and B, and each channel is used to complete addition of elements at same positions in the first input vector and the second input vector, such as *a* + *d, b* + *e*, and *c* + *f.* The vector operation units A and B concurrently perform operation on the vector input value to obtain a vector operation result *f*_{*o,*1} *=* [*a* + *d b* + *e c* + *f*]*^{T}* corresponding to the vector operation unit A and a vector operation result *f*_{o,2} *=* [*a + d b + e c* + *f*]*^{T}* corresponding to the vector operation unit B. If calculations of the two vector operation units are correct, *f*_{*o,*1} needs to be same as *f*_{*o,*2}*,* and first test result of the vector operation units A and B may be determined by comparing *f*_{*o*,1} and *f*_{*o,*2}*.*

In some optional embodiments, a processor core where the vector operation unit is located may be used as the current processor core, and a vector operation unit of the current processor core may be used as a current vector operation unit. In this case, a first test result of the current vector operation unit may also be determined based on a vector operation result of the current vector operation unit and other vector operation results of other vector operation units in other cores except the current processor core of the processor. For example, after obtaining the vector operation result of the vector operation unit, each core in the processor may write the vector operation result into a shared storage space of the cores of the processor. The current processor core may read other vector operation results of other cores of the processor from the shared storage space, compare a current vector operation result with the other read vector operation results, and determine a first test result of the current vector operation unit based on a comparison result. Each core of the processor may be pre-configured with storage information of other vector operation results to be read during testing, such as a storage address and a register identifier. Each core of the processor writes the respective vector operation result to a specified storage area, and obtains other vector operation results from the corresponding storage area based on the pre-configured to-be-read storage information of other vector operation results.

Step 2042. Determine a second test result of the scalar operation unit based on the scalar operation result.

In some optional embodiments, if the current processor core includes multiple scalar operation units, the scalar operation result includes scalar operation results respectively corresponding to the scalar operation units. In this case, the second test result of each scalar operation unit may be determined based on the scalar operation results respectively corresponding to the scalar operation units. For example, the scalar operation results respectively corresponding to the scalar operation units may be compared, and the second test result of each scalar operation unit may be determined based on a comparison result. For example, the scalar operation results respectively corresponding to the scalar operation units are compared pairwise. If all comparison results are equal, it is determined that the second test result of each scalar operation unit is test succeeded. In other words, there is no abnormality in each scalar operation unit.

In some optional embodiments, if the current processor core only includes one scalar operation unit, a current scalar operation result of the current scalar operation unit may also be compared with other scalar operation results of other scalar operation units in other cores of the processor, and the second test result of the current scalar operation unit may be determined based on a comparison result. For example, after obtaining the scalar operation result, each core in the processor may write the scalar operation result into the shared storage space of the cores in the processor. In this case, the current processor core may read other scalar operation results of other cores of the processor from the shared storage space. The current scalar operation result is compared with the other read scalar operation results. If a comparison result is equal, it is determined that the second test result of the current scalar operation result is test succeeded. Storage information (such as a storage address and a register identifier) of other scalar operation results of other cores of the processor that each core of the processor needs to read may be preset. Each core of the processor writes the respective scalar operation result to a specified storage area, and may read corresponding other scalar operation results from the shared storage space based on the pre-configured to-be-read storage information.

It should be noted that steps 2041 and 2042 are not in a sequential order.

Step 2043. Determine the test result based on the first test result and the second test result.

After the first test result of the vector operation unit and the second test result of the scalar operation unit are obtained, the test result of the processor may be determined by integrating the first test result and the second test result.

In some optional embodiments, if both the first test result and the second test result are test succeeded, it is determined that the test result of the processor is test succeeded. Otherwise, if it is determined that the test result of the processor is test failed, corresponding countermeasures may be taken in a timely manner, such as outputting exception prompt information to prompt the user to handle an exception of the processor in a timely manner. For another example, an error may also be reported to an error processing module of the processor core or to an error processing module of the processor, so that the error processing module can perform error handling, such as restarting the processor core. Specific countermeasures may be set according to actual requirements, which is not limited in the embodiments of this disclosure.

According to the embodiments, the first test result of the vector operation unit is determined based on the vector operation result, and the second test result of the scalar operation unit is determined based on the scalar operation result. The test result of the processor is determined by integrating the first test result and the second test result, so that self-tests of the processor are implemented. Thus, frequent loading of standard result data from the external is effectively avoided, thereby improving testing efficiency.

In some optional embodiments, step 2032 of controlling, based on the vector operation instruction, the vector operation unit to perform operation on the vector input value in the test input value, to obtain the vector operation result includes: controlling, based on the vector operation instruction, channels of the vector operation unit to respectively perform operation on the vector input value, to obtain operation results respectively corresponding to the channels.

The vector operation unit may be an N-channel vector operation unit, where N is an integer greater than 1. Each channel corresponds to a thread, and is used to perform operation on one element of a vector. Operation of a vector with N elements (that is, a length is N) is implemented by using N channels.

In some optional embodiments, input values corresponding to the channels may be set to a same value. In this way, the channels concurrently perform operation on the same input value to obtain the operation results respectively corresponding to the channels. For example, it is satisfied that *f_{in,1}* = [*a a a*]*^{T}* and *f*_{*in,*2} = [*d d d*]*^{T}.* Each channel completes operation of *a* + *d.*

Step 204 of determining the test result based on the operation result includes: determining a first test result of the vector operation unit based on the operation results respectively corresponding to the channels.

In some optional embodiments, for any one of the channels, an operation result corresponding to this channel may be compared with operation results of other channels. A test result of this channel may be determined based on a comparison result, and then the first test result of the vector operation unit may be determined by integrating test results of all the channels.

In some optional embodiments, the operation results respectively corresponding to the channels may be used as inputs of a shuffle instruction. Data exchange is performed between threads through the shuffle instruction, so that the operation results respectively corresponding to the channels are exchanged, and a result after the exchange is written back to to-be-compared registers respectively corresponding to the channels. To be specific, each channel may correspond to a register (which may be referred to as a first register) that stores the operation result of this channel and a to-be-compared register (which may be referred to as a second register). The to-be-compared register is configured to store an operation result after the exchange between this channel and other channels. In this way, by comparing values of the first register and the second register, the operation result of this channel may be compared with the operation results of other channels, so as to obtain the test result of this channel. For example, operation results of two channels may be compared through a comparison instruction, so as to obtain the test result of that channel.

According to the embodiments, by determining the first test result of the vector operation unit based on the operation results respectively corresponding to the channels in the vector operation unit, the testing of the vector operation unit may be implemented within the processor core without relying on vector operation results of other processor cores. There is no need to load data from external of the processor core, so that testing efficiency is further improved.

In some optional embodiments, the determining a first test result of the vector operation unit based on the operation results respectively corresponding to the channels includes: for any one channel among the channels, taking the channel as a target channel, and comparing the operation result corresponding to the target channel with the operation result corresponding to at least one other channel among the channels except the target channel, to obtain a first comparison result corresponding to the target channel; and determining a test result of the vector operation unit based on the first comparison result corresponding to each channel.

In some optional embodiments, a quantity of the at least one other channel may be specifically set according to actual requirements. For example, the quantity of the at least one other channel may be 1, 2, or 3.

In some optional embodiments, the operation result of each channel may be written into a corresponding result register of that channel. For the target channel, the operation result thereof may be read from the register of the target channel, and the operation results of the other channels may be read from registers of the other channels. The operation result of the target channel is compared with the operation results of the other channels through the comparison instruction, so that the first comparison result corresponding to the target channel is obtained. For the operation results of multiple other channels, the operation result of the target channel may be respectively compared with other operation results of the other channels, so as to obtain multiple first comparison results corresponding to the target channel.

In some optional embodiments, each channel may include the first register and the second register described above. The operation result of the target channel is written into the first register, and the operation results of the other channels are read and written into the second register of the target channel. Values of the first register and the second register are compared to obtain the first comparison result of the target channel.

In some optional embodiments, referring to the foregoing embodiments, the operation results of the channels may be exchanged through the shuffle instruction, and the exchanged operation results may be written into the second register. Alternatively, the exchanged operation result of each channel is compared with the operation result of this channel through the comparison instruction, so that the first comparison result of this channel may be obtained.

In some alternative embodiments, the first comparison result of each channel may include results of equal and unequal. If the first comparison result is equal, it indicates that channel test is successful. If the first comparison result is unequal, it indicates that the channel test is failed. The test result (that is, the first test result) of the vector operation unit may be determined in combination with the first comparison results respectively corresponding to the channels. For example, in response to that the first comparison results of the channels are equal, it is determined that the test result of the vector operation unit is test succeeded. In response to that the first comparison result of at least one of the channels is unequal, it is determined that the test result of the vector operation unit is test failed.

In some optional embodiments, FIG. 6 is a schematic diagram of a structure of a processor core according to an exemplary embodiment of this disclosure. As shown in FIG. 6, the processor core may include an N-channel vector operation unit, a scalar operation unit, a storage space, and a processing unit. The N-channel vector operation unit may complete operation on a vector with a length of N to obtain a vector operation result, which includes operation results respectively corresponding to channels. During a testing process, the channels may be enabled to concurrently perform same operation to obtain the operation results respectively corresponding to the channels. If there are no exceptions in calculation of each channel, the operation results of the channels need to be equal. Based on this, for the vector operation unit of the processor, the operation result of each channel (which is used as the operation result of the target channel) may be compared with the operation result of at least one other channel to obtain the first comparison result corresponding to that target channel. The test result (that is, the first test result) of the vector operation unit is determined based on the first comparison results corresponding to the channels. For example, if the first comparison results of the channels are equal, it may be determined that the first test result of the vector operation unit is test succeeded. Otherwise, if the first comparison result of at least one channel is unequal, it is determined that the first test result of the vector operation unit is test failed.

According to the embodiments, the first comparison result of each channel in the vector operation unit is obtained by comparing the operation result of each channel with the operation result of at least one other channel. The test result of the vector operation unit may be effectively determined based on the first comparison result of each channel. The test result of the vector operation unit may be determined based on a real-time operation result, without relying on the pre-prepared standard result, which avoids or reduces loading of data from the external, thereby helping improve testing efficiency.

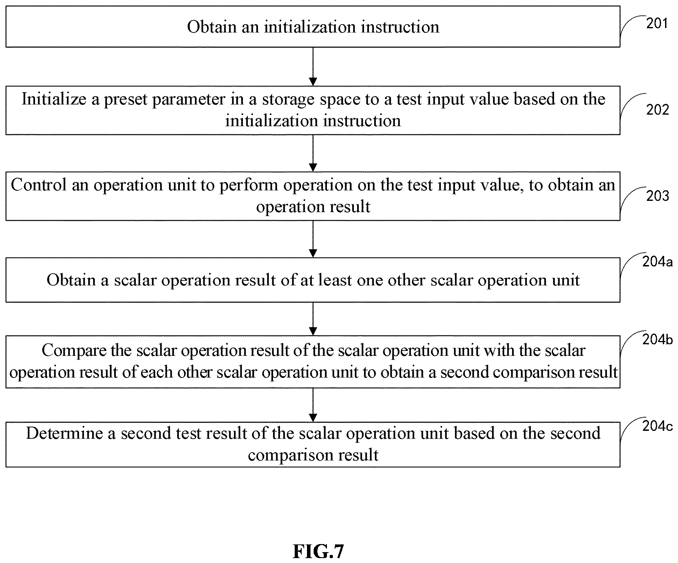

FIG. 7 is a schematic flowchart of a processor testing method according to still yet another exemplary embodiment of this disclosure.

In some optional implementations, as shown in FIG. 7, step 204 of determining test result based on the operation result includes the following steps.

Step 204a. Obtain a scalar operation result of at least one other scalar operation unit.

The other scalar operation unit refers to an operation unit within another processor core in the processor except the current processor core where the scalar operation unit is located.

In some optional embodiments, each processor may include multiple processor cores (which are referred to as cores for short), and testing of the scalar operation unit may be implemented by comparing scalar operation results of different cores of the processor.

In some optional embodiments, scalar operation results of other scalar operation units may be obtained from other cores of the processor, or from the shared storage space of the cores of the processor. For example, the scalar operation results of other scalar operation units in other cores are obtained from the other cores of the processor through inter-core communication. For another example, if each core of the processor writes the scalar operation result into the shared storage space, each core may read the scalar operation results of other cores from the shared storage space.

Step 204b. Compare the scalar operation result of the scalar operation unit with the scalar operation result of each other scalar operation unit to obtain a second comparison result.

At least one second comparison result of the current scalar operation unit may be obtained by comparing the scalar operation result of the scalar operation unit (the current scalar operation unit in the current processor core) with the obtained scalar operation result of each other scalar operation unit through the comparison instruction. In other words, each other scalar operation unit corresponds to a second comparison result.

In some optional embodiments, the second comparison result may include results of equal and unequal.

In some optional embodiments, the scalar operation units in multiple cores of the processor may concurrently perform same operation on a same scalar input value, so that the operation results of various scalar operation units are theoretically equal, which facilitates testing of the scalar operation units by comparing the scalar operation results of the various cores.

In some optional embodiments, test input values may be different for testing processes at different moments. During a same testing process, test input values of the various core of the processor may be same. To be specific, all the cores of the processor implement the processor testing method in this disclosure concurrently to complete overall testing of the processor.

Step 204c. Determine a second test result of the scalar operation unit based on the second comparison result.

If each second comparison result of the current scalar operation unit is equal, it may be determined that the second test result of the scalar operation unit is test succeeded. If at least one second comparison result of the current scalar operation unit is unequal, it is determined that the second test result of that scalar operation unit is test failed.

According to the embodiments, the second comparison result is obtained by comparing the scalar operation result of the scalar operation unit in each core of the processor with other scalar operation results of at least one other core of the processor. The second test result of the scalar operation unit is determined based on the second comparison result, thus achieving effective testing of the scalar operation unit.

In some optional embodiments, step 2042 of determining the second test result of the scalar operation unit based on the scalar operation result includes the foregoing steps 204a to 204c.

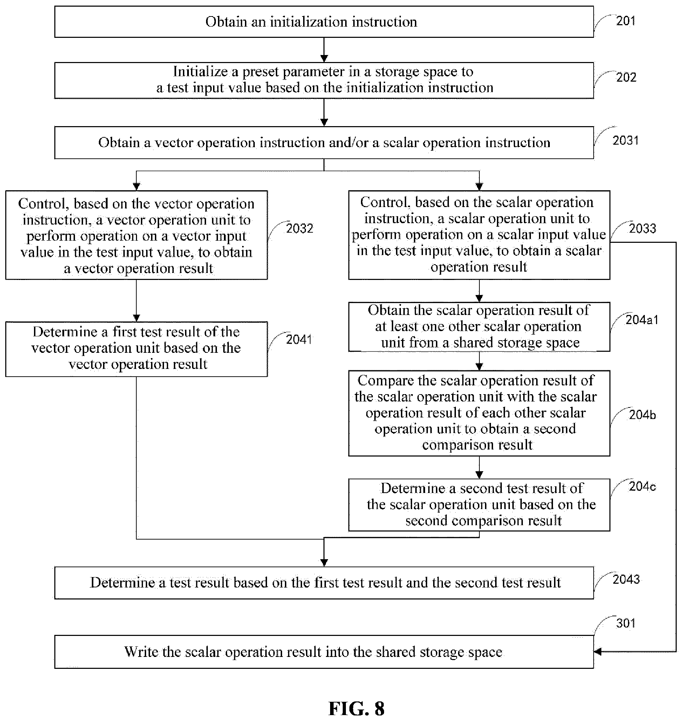

FIG. 8 is a schematic flowchart of a processor testing method according to a further exemplary embodiment of this disclosure.

In some optional embodiments, as shown in FIG. 8, after step 2033 of controlling, based on the scalar operation instruction, the scalar operation unit to perform operation on the scalar input value in the test input value, to obtain the scalar operation result, the method further includes:
Step 301. Write the scalar operation result into a shared storage space.

The shared storage space is a storage space in the processor outside the cores that may be shared. Each core of the processor may access the shared storage space and perform write and read operations on the shared storage space. In this case, after obtaining the scalar operation result, each core may write the scalar operation result into the shared storage space for use by other cores of the processor. For example, scalar operation result storage areas respectively corresponding to all cores may be set in the shared storage space, and each core of the processor may write the scalar operation result obtained through operation of the scalar operation unit into the specified storage area.

Step 204a of obtaining the scalar operation result of at least one other scalar operation unit includes:
Step 204a1. Obtain the scalar operation result of at least one other scalar operation unit from the shared storage space.

Storage information, such as storage addresses, of the scalar operation results of other cores for comparison may also be configured in each core of the processor, so that the scalar operation results of other scalar operation units may be obtained from the shared storage space based on the storage information of the other scalar operation results.

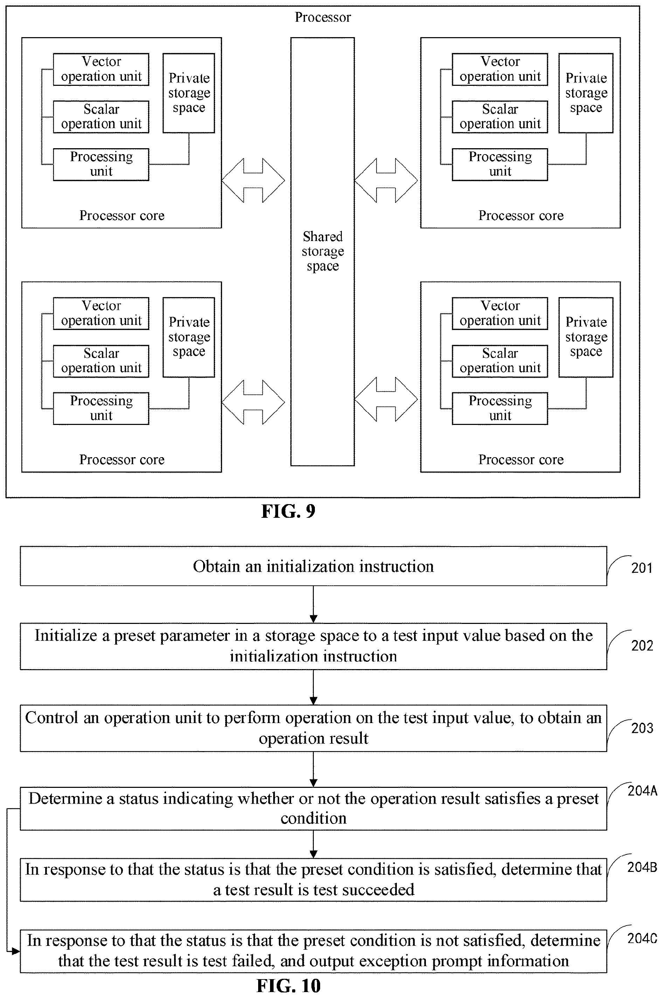

In some optional embodiments, FIG. 9 is a schematic diagram of a structure of a processor according to an exemplary embodiment of this disclosure. As shown in FIG. 9, the processor includes multiple processor cores (that is, multiple cores) and a storage space (that is, a shared storage space) shared by the multiple processor cores. Each core of the processor includes a vector operation unit, a scalar operation unit, a processing unit, and a private storage space. During the testing process, a scalar operation result of a scalar operation unit in each core may be written into the private storage space, or may be written into a specified storage area in the shared storage space, so that other scalar operation units can obtain the scalar operation result of this scalar operation unit from the shared storage space. Each core (which is used as a current processor core) may read other scalar operation results of other cores from the shared storage space, and write the other read scalar operation results into the private storage space of the current processor core. The scalar operation result of the current processor core in the private storage space is compared with other scalar operation results, so that scalar operation results of any two scalar operation units in the processor may be compared. The second test result of the scalar operation unit is determined based on a comparison result.

According to the embodiments, the scalar operation result is written into the shared storage space to be read and used by other cores of the processor. The scalar operation results of other cores may also be read from the shared storage space, so as to obtain the second test result of the scalar operation unit through comparison, which avoids loading data from the external of the processor, thereby improving testing efficiency of the scalar operation unit.

In some optional embodiments, step 204a1 of obtaining the scalar operation result of at least one other scalar operation unit from the shared storage space includes: obtaining an acknowledgment signal indicating completion of writing back, where the acknowledgment signal is used to indicate that all scalar operation results of scalar operation units in processor cores have been written into the shared storage space, and the processor cores include the current processor core and other processor cores except the current processor core; and obtaining the scalar operation result of the at least one other scalar operation unit from the shared storage space based on the acknowledgment signal.

The acknowledgment signal may be generated by a top-level core of the processor and may be sent to each core of the processor. After receiving the acknowledgment signal, each core of the processor determines that the other cores of the processor have written the scalar operation results into the shared storage space, so that the scalar operation result of at least one other scalar operation unit may be obtained from the shared storage space, and is compared with the scalar operation result of this core to obtain the second comparison result.

In some optional embodiments, synchronization of the cores of the processor may be achieved through a barrier instruction. To be specific, the processor core executes the scalar operation instruction, executes the barrier instruction after the scalar operation results obtained through operation are written into the shared storage space, and stops to wait for other cores of the processor to write the scalar operation results into the shared storage space, so as to ensure that all cores of the processor write the scalar operation results back into the shared storage space. The top-level core of the processor may detect an instruction execution status of each core of the processor. If it is detected that all cores have executed the barrier instruction, it may be determined that each core has written the scalar operation result into the shared storage space. In this case, the acknowledgment signal may be generated and may be transmitted to each core. After receiving the acknowledgment signal, each core of the processor reads other scalar operation results of other cores from the shared storage space. This processor core compares the scalar operation result thereof with the other read scalar operation results to obtain the second comparison result. The second test result of the scalar operation unit is determined based on the second comparison result.

According to the embodiments, other scalar operation results of other cores are read from the shared storage space after it is confirmed through the acknowledgment signal that other cores of the processor have written the scalar operation results into the shared storage space. In this way, a situation where other scalar operation results cannot be read or incorrect results are read because the other scalar operation results are not yet written into the shared storage space may be avoided, thereby improving reliability of the test.

FIG. 10 is a schematic flowchart of a processor testing method according to a still further exemplary embodiment of this disclosure.

In some optional implementations, as shown in FIG. 10, step 204 of determining test result based on the operation result includes the following steps.

Step 204A. Determine a status indicating whether or not the operation result satisfies a preset condition.

The preset condition may be set according to actual testing requirements. For example, the preset condition includes that the vector operation result satisfies a testing condition (which may be referred to as a vector testing condition) corresponding to the vector operation unit, and that the scalar operation result satisfies a testing condition (which may be referred to as a scalar testing condition) corresponding to the scalar operation unit. That the vector operation result satisfies the vector testing condition includes that the first test result of the vector operation unit is test succeeded. That the scalar operation result satisfies the scalar testing condition includes that the second test result of the scalar operation unit is test succeeded. The status in which the operation result satisfies the preset condition includes two states: satisfied and unsatisfied. In a preferred embodiment, if the vector operation result satisfies the vector testing condition and the scalar operation result satisfies the scalar testing condition, the status of the operation result about satisfying the preset condition may be determined as satisfied. Otherwise, if either the vector operation result or the scalar operation result does not satisfy the corresponding test condition, the status of the operation result about satisfying the preset condition may be determined as unsatisfied.

Step 204B. In response to that the status is that the preset condition is satisfied, determine that the test result is test succeeded.

Step 204C. In response to that the status is that the preset condition is not satisfied, determine that the test result is test failed, and output exception prompt information.

An output manner of the exception prompt information may be any feasible output manner. For example, the exception prompt information may be output through voice broadcast, screen display, and other manners.

In some optional embodiments, if it is determined that the test result of the processor is test failed, exception information may also be reported to an exception handling module (or a fault processing module) to enable the exception handling module to perform corresponding exception handling, such as restarting the processor core, so as to resolve the exception of the processor in a timely manner.

According to the processor testing method in the embodiments of this disclosure, the immediate number instruction is used to initialize parameters in the private storage space, avoiding frequent loading or writing back of the data from the external of the processor. Therefore, execution time of the test is relatively short, and the test does not rely on delay of an external bus, which may effectively improve the testing efficiency. Moreover, concurrency of the vector operation units and a feature of exchanging thread data through the shuffle instruction may be utilized to achieve comparison between different channels. In addition, according to the embodiments of this disclosure, multiple identical cores in the processor and barrier synchronization instructions are utilized to implement synchronization between multiple cores. In this case, comparison between the scalar operation results of the scalar operation units in different cores of the processor is implemented. Thus, self-tests of the processor may be implemented quickly and effectively without the standard result, and synchronizing the self-tests with hardware development effectively shortens a development cycle of the test case.

The processor testing method in the embodiments of this disclosure may be a pure software testing method, and may not involve improvement to processor hardware. For example, the processing units in FIG. 1 that implement the processor testing method in this disclosure may be a part of the processor core that is used to run a software program, and the method in this disclosure may be implemented by running the software program of the method in this disclosure.

The foregoing embodiments of this disclosure may be implemented separately or in any combination without conflict. This may be specifically set according to actual requirements, and is not limited in this disclosure.

Any method of testing a processor provided in the embodiments of this disclosure may be implemented by any suitable device with a data processing capability, including but not limited to a terminal device and a server. Alternatively, any method of testing a processor provided in the embodiments of this disclosure may be implemented by the processor. For example, the processor implements any method of testing a processor described in the embodiments of this disclosure by invoking corresponding instructions stored in the memory. Details are not described below.

### Exemplary apparatus

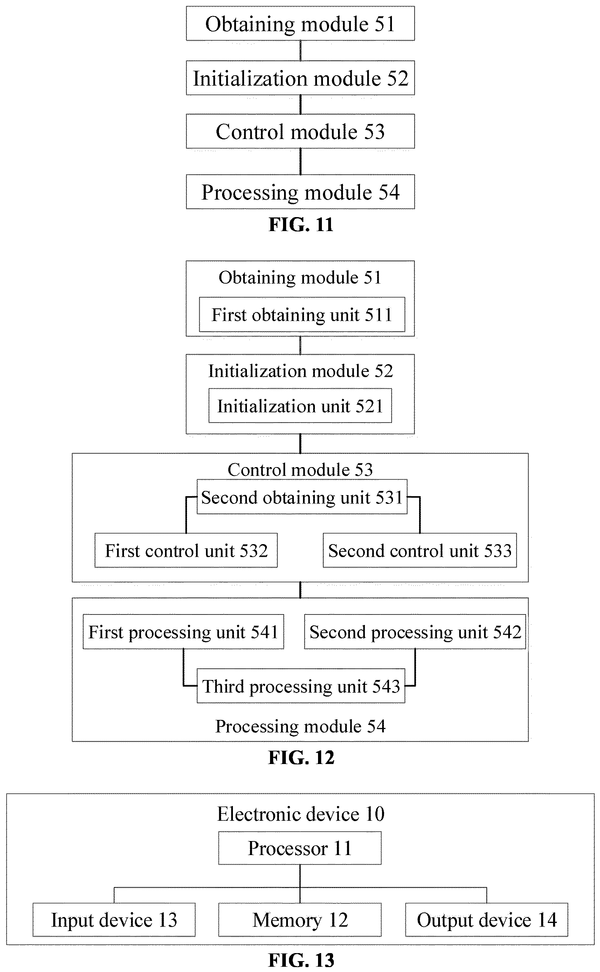

FIG. 11 is a schematic diagram of a structure of a processor testing apparatus according to an exemplary embodiment of this disclosure. The processor testing apparatus in this embodiment may be configured to implement corresponding embodiments of the processor testing method in this disclosure. The apparatus shown in FIG. 11 includes an obtaining module 51, an initialization module 52, a control module 53, and a processing module 54.

The obtaining module 51 is configured to obtain an initialization instruction.

The initialization module 52 is configured to initialize a preset parameter in a storage space to a test input value based on the initialization instruction.

The control module 53 is configured to control an operation unit to perform operation on the test input value, to obtain an operation result.

The processing module 54 is configured to determine a test result based on the operation result.

FIG. 12 is a schematic diagram of a structure of a processor testing apparatus according to another exemplary embodiment of this disclosure.

In some optional embodiments, as shown in FIG. 12, the obtaining module 51 includes a first obtaining unit 511, which is configured to obtain an immediate number initialization instruction.

The immediate number initialization instruction includes the test input value to be written into the storage space.

The initialization module 52 includes an initialization unit 521 that is configured to initialize the preset parameter in the storage space as the test input value based on the immediate number initialization instruction.

In some optional embodiments, the obtaining module 51 is specifically configured to detect a trigger signal for entering a testing process; and obtain the initialization instruction based on the trigger signal.

In some optional embodiments, the control module 53 includes a second obtaining unit 531, a first control unit 532, and a second control unit 533.

The second obtaining unit 531 is configured to obtain a vector operation instruction and/or a scalar operation instruction.

The first control unit 532 is configured to control, based on the vector operation instruction, a vector operation unit to perform operation on a vector input value in the test input value, to obtain a vector operation result.

The second control unit 533 is configured to control, based on the scalar operation instruction, a scalar operation unit to perform operation on a scalar input value in the test input value, to obtain a scalar operation result.

The operation result includes the vector operation result and/or the scalar operation result.

In some optional embodiments, the processing module 54 includes a first processing unit 541, a second processing unit 542, and a third processing unit 543.

The first processing unit 541 is configured to determine a first test result of the vector operation unit based on the vector operation result.

The second processing unit 542 is configured to determine a second test result of the scalar operation unit based on the scalar operation result.

The third processing unit 543 is configured to determine the test result based on the first test result and the second test result.

In some optional embodiments, the first control unit 532 is specifically configured to control, based on the vector operation instruction, channels of the vector operation unit to respectively perform operation on the vector input value, to obtain operation results respectively corresponding to the channels.

The processing module 54 or the first processing unit 541 is specifically configured to determine a first test result of the vector operation unit based on the operation results respectively corresponding to the channels.

In some optional embodiments, the processing module 54 or the first processing unit 541 is specifically configured to: for any one channel among the channels, take the channel as a target channel, and compare the operation result corresponding to the target channel with the operation result corresponding to at least one other channel among the channels except the target channel, to obtain a first comparison result corresponding to the target channel; and determine a test result of the vector operation unit based on the first comparison result corresponding to each channel.

In some optional embodiments, the processing module 54 or the second processing unit 542 is specifically configured to obtain a scalar operation result of at least one other scalar operation unit. The other scalar operation unit refers to an operation unit in another processor core except a current processor core where the scalar operation unit is located. The scalar operation result of the scalar operation unit is compared with the scalar operation result of each other scalar operation unit to obtain a second comparison result. A second test result of the scalar operation unit is determined based on the second comparison result.

In some optional embodiments, the second control unit 533 is further configured to write the scalar operation result into a shared storage space.

The processing module 54 or the second processing unit 542 is specifically configured to obtain the scalar operation result of at least one other scalar operation unit from the shared storage space.

In some optional embodiments, the processing module 54 or the second processing unit 542 is specifically configured to: obtain an acknowledgment signal indicating completion of writing back, where the acknowledgment signal is used to indicate that all scalar operation results of scalar operation units in processor cores have been written into the shared storage space, and the processor cores include the current processor core and other processor cores; and obtain the scalar operation result of the at least one other scalar operation unit from the shared storage space based on the acknowledgment signal.

In some optional embodiments, the processing module 54 is specifically configured to determine a status indicating whether or not the operation result satisfies a preset condition. In response to that the status is that the preset condition is satisfied, it is determined that the test result is test succeeded. In response to that the status is that the preset condition is not satisfied, it is determined that the test result is test failed, and exception prompt information is output.

For beneficial technical effects corresponding to the exemplary embodiments of this apparatus, reference may be made to the corresponding beneficial technical effects in the section of exemplary method described above, and details are not described herein again.

### Exemplary electronic device

FIG. 13 is a diagram of a structure of an electronic device according to an embodiment of this disclosure. The electronic device includes at least one processor 11 and a memory 12.

The processor 11 may be a central processing unit (CPU) or another form of processing unit having a data processing capability and/or an instruction execution capability, and may control other components in the electronic device 10 to implement desired functions.

The memory 12 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 11 may execute the one or more program instructions to implement the method according to the various embodiments of this disclosure that are described above and/or other desired functions.

In an example, the electronic device 10 may further include an input device 13 and an output device 14. These components are connected to each other through a bus system and/or another form of connection mechanism (not shown).

The input device 13 may further include, for example, a keyboard and a mouse.

The output device 14 may output various information to the outside, and may include, for example, a display, a speaker, a printer, a communication network, and a remote output device connected to the communication network.

Certainly, for simplicity, FIG. 13 shows only some of components in the electronic device 10 that are related to this disclosure, and components such as a bus and an input/output interface are omitted. In addition, according to specific application situations, the electronic device 10 may further include any other appropriate components.

### Exemplary computer program product and computer readable storage medium

In addition to the foregoing method and device, embodiments of this disclosure may also provide a computer program product, which includes computer program instructions. When the computer program instructions are executed by a processor, the processor is enabled to perform the steps, of the method according to the embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A processor testing method, **characterized in that** the processor testing method comprises:
obtaining (201) an initialization instruction;
initializing (202) a preset parameter in a storage space to a test input value based on the initialization instruction;
controlling (203) an operation unit to perform operation on the test input value, to obtain an operation result; and
determining (204) a test result based on the operation result.

2. The method according to claim 1, wherein the controlling an operation unit to perform operation on the test input value, to obtain an operation result comprises:
obtaining (2031) a vector operation instruction and/or a scalar operation instruction;
controlling (2032), based on the vector operation instruction, a vector operation unit to perform operation on a vector input value in the test input value, to obtain a vector operation result; and
controlling (2033), based on the scalar operation instruction, a scalar operation unit to perform operation on a scalar input value in the test input value, to obtain a scalar operation result, wherein
the operation result comprises the vector operation result and/or the scalar operation result.

3. The method according to claim 2, wherein the determining (204) a test result based on the operation result comprising:
determining (2041) a first test result of the vector operation unit based on the vector operation result;
determining (2042) a second test result of the scalar operation unit based on the scalar operation result; and
determining (2043) the test result based on the first test result and the second test result.

4. The method according to claim 2, wherein the controlling (2032), based on the vector operation instruction, a vector operation unit to perform operation on a vector input value in the test input value, to obtain a vector operation result comprises:
controlling, based on the vector operation instruction, channels of the vector operation unit to respectively perform operation on the vector input value, to obtain operation results respectively corresponding to the channels; and
the determining (204) a test result based on the operation result comprises:
determining a first test result of the vector operation unit based on the operation results respectively corresponding to the channels.

5. The method according to claim 4, wherein the determining a first test result of the vector operation unit based on the operation results respectively corresponding to the channels comprising:
for any one channel among the channels, taking the channel as a target channel, and comparing the operation result corresponding to the target channel with the operation result corresponding to at least one other channel among the channels except the target channel, to obtain a first comparison result corresponding to the target channel; and
determining a test result of the vector operation unit based on the first comparison result corresponding to each channel.

6. The method according to claim 2, wherein the determining a test result based on the operation result comprising:
Obtaining (204a) a scalar operation result of at least one other scalar operation unit, wherein the other scalar operation unit refers to an operation unit in another processor core except a current processor core where the scalar operation unit is located;
comparing (204b) the scalar operation result of the scalar operation unit with the scalar operation result of each other scalar operation unit to obtain a second comparison result; and
determining (204c) a second test result of the scalar operation unit based on the second comparison result.

7. The method according to claim 6, wherein after the controlling, based on the scalar operation instruction, a scalar operation unit to perform operation on a scalar input value in the test input value, to obtain a scalar operation result, the method further comprises:
writing (301) the scalar operation result into a shared storage space; and
the obtaining a scalar operation result of at least one other scalar operation unit comprises:
obtaining (204a1) the scalar operation result of at least one other scalar operation unit from the shared storage space.

8. The method according to claim 7, wherein the obtaining the scalar operation result of at least one other scalar operation unit from the shared storage space comprises:
obtaining an acknowledgment signal indicating completion of writing back, wherein the acknowledgment signal is used to indicate that all scalar operation results of scalar operation units in processor cores have been written into the shared storage space, and the processor cores comprise the current processor core and other processor cores; and
obtaining the scalar operation result of the at least one other scalar operation unit from the shared storage space based on the acknowledgment signal.

9. The method according to any one of claims 1 to 8, wherein the obtaining an initialization instruction comprises:
obtaining (2011) an immediate number initialization instruction, wherein the immediate number initialization instruction comprises the test input value to be written into the storage space.

10. The method according to any one of claims 1 to 8, wherein the determining a test result based on the operation result comprising:
determining (204A) a status indicating whether or not the operation result satisfies a preset condition;
in response to that the status is that the preset condition is satisfied, determining (204B) that the test result is test succeeded; and
in response to that the status is that the preset condition is not satisfied, determining (204C) that the test result is test failed, and outputting exception prompt information.

11. The method according to any one of claims 1 to 8, wherein the obtaining an initialization instruction comprises:
detecting (201a) a trigger signal for entering a testing process; and
obtaining (201b) the initialization instruction based on the trigger signal.

12. A processor testing apparatus, **characterized in that** the processor testing apparatus comprises:
an obtaining module (51), configured to obtain an initialization instruction;
an initialization module (52), configured to initialize a preset parameter in a storage space to a test input value based on the initialization instruction;
a control module (53), configured to control an operation unit to perform operation on the test input value, to obtain an operation result; and
a processing module (54), configured to determine a test result based on the operation result.

13. The processor testing apparatus according to claim 12, wherein the obtaining module (51) comprises a first obtaining unit (511), which is configured to obtain an immediate number initialization instruction.

14. A computer readable storage medium, **characterized in that** the storage medium stores a computer program, and the computer program is used for implementing the method according to any one of claims 1 to 11 when executed by a processor.

15. An electronic device (10), **characterized in that** the electronic device comprises:
a processor (11); and
a memory (12), configured to store processor-executable instructions, wherein
the processor (11) is configured to read the executable instruction from the memory (12), and execute the instruction to implement the method according to any one of claims 1 to 11.
